# EUROPEAN PATENT APPLICATION

(11) **EP 1 519 607 A1**
(43) Date of publication of application: **30.03.2005**
(21) Application number: 03425615.6
(22) Date of filing: 23.09.2003
(51) Int. Cl.: H04Q 7/38

(54) **A method and system for performing radio resource management in a mobile radio network**

(71) Applicant: Siemens Aktiengesellschaft, 80333 München (DE); Siemens Mobile Communications S.p.A., 20126 Milano (IT)
(72) Inventor: Krause, Jörn Dr., 12107 Berlin (DE); Ali Memar, Mohammad Dr., 1190 Wien (AT); Meago, Francesco, 23100 Sondrio (IT)
(74) Representative: Giustini, Delio

(57) **Abstract**

A method and system for performing radio resource management in a mobile radio network

The present invention relates to a method for performing radio resource management (RRM) in a mobile radio network. It is used in the field of Public Land Mobile Networks (PLMN) and more precisely to a Common Radio Resource management (CRRM) method or system based on exchanging load information among different network entities (CN, RNC/BSC, Node B/UCS, CRRM server) in a mobile radio network. The method and system is characterized in that:
- transmitting user equipment information and/or subscriber related information and/or radio cell status information from different network entities (CN, RNC/BSC, Node B/UCS) to a Common Resource Management entity (CRRM); and
- using said pieces of information in said Common Resource Management entity (CRRM) for deciding on the most suitable network access.

## Description

### FIELD OF THE INVENTION

The present invention relates to a method for performing radio resource management in a mobile radio network.

It is used in the field of Public Land Mobile Networks (PLMN) and more precisely to a Common Radio Resource management method or system based on exchanging load information among different network entities in a mobile radio network.

### BACKROUND OF THE INVENTION

With the introduction of 3rd Generation UMTS systems the multi-RAT (Radio Access Technology) opportunities will be putted in foreground. The mobile Networks of the near future will be characterised by co-existence of different radio access technologies. The multi-radio environment will include GSM, GERAN, UTRA FDD, UTRA TDD LCR, UTRA TDD HCR, CDMA2000 and in the future probably also OFDM, WLAN and satellite. The mobile network operators will have to cope with a variety of users demand. One of the most important user demands will be to get seamlessly the best-suited radio access at any time for every requested service. In such circumstance the efficient management of multi radio network resources is becoming essential. Some ways for improvement of resource usage efficiency in multi radio access environment is the subject of present invention.

By the International Publication WO 00/35226 it is known a concept of a server based Common Radio Resource Management system that is based on the exchange of Load information between Radio Resource Management (RRM) entities of different access technologies and a CRRM Server which provides on demand information about load situation of neighbour cells to RRMs which requires this information. Based on this information a possible hand over to a cell in a neighbouring RNC/BSC can be initiated. This solution builds the base of the 3GPP RAN WG3 CRRM approach. The currently standardised Release 5 solution considers an exchange of Load information among RNCs/BSCs, however this solution has several drawbacks including scalability. The main weakness of current REL-5 solution is identified in the indeterminacy of the Load information. However, a future system that seamlessly integrates different radio technologies would require a lot more CRRM functionality than the currently envisaged functionality.

It is therefore an object of the present invention to provide a method and system for performing a radio resource management in a mobile radio network which provide more information to the Common Radio Resource Management Process in order to improve decisions how users should be distributed in the network.

This object is achieved by a method for performing radio resource management in a mobile radio network using the steps and the arrangements respectively which are mentioned in the independent claims. Further advantageous embodiments of the invention are described in the dependent claims.

Relating this invention the term "CRRM Process" is defined to indicate the overall process that is responsible for a coordinated radio resource management in a network characterised by different RATs, Radio Access Modes/Options. The CRRM Process might involve different RRM and CRRM entities, in particular, it could be either implemented in a CRRM or RRM functional entity, or it could be a process that involves both entities. The CRRM Process could be implemented in 3GPP evolved architectures (e.g. UTRAN Evolution) that consider different split of functionality and different nodes inside the RAN (different compared to the current architecture). The CRRM Process includes among the others handover/cell-reselection decision process and Call Admission Control process.

Based on these detailed information and their combination provided to the CRRM Process, more efficient resource usage can be achieved which meets the requirements of both subscriber and network operator.

According to this invention and in contrast to current version of 3GPP proposal, the CRRM entity should not only receive load information (for RT and NRT, for UL and DL) of cells together with a cell capacity class indicator (providing just a relative estimation of the cell capacity) but in addition:
UE-specific information (e.g. the user terminal's capabilities, user's settings (preferences), more accurate information about user's location), subscriber related information (e.g. subscription to specific services) and detailed information on the cell resource status (e.g. differentiated current load of certain traffic classes or services like HSDPA, MBMS,...) and the cell capabilities.
By combination of all these information a better mobility management (e.g. in case of inter system handover (relocation)) can be performed resulting in increased user's satisfaction. Also a more efficient usage of multi radio access network resources will be achieved including suppressed interference and a better load balancing in whole radio access network.

A better performance of the CRRM process can be achieved if among others all or part of the following information are available:
a) additional user/UE-specific information:

The present concept of CRRM does not consider UE specific information since load evaluations are done on a cell basis. However modifications of the concept or future UTRAN evolution might take this into account.
This information can be taken into account by CRRM to offer the user/UE the most appropriate resource(s) that the user/UE is able to use and also to serve user needs and to optimize the traffic in the network. Without this information CRRM could only decide from the network point of view without taking UE/user related information into account like e.g.:
   - MS/UE classmark related information (see e.g. 24.008 REL-5 10.5.1.5 ff for classmark 1, 2, 3) which indicate e.g. UE power class, supported frequency bands, supported positioning methods and modulations (e.g. for EDGE or HSDPA), supported RATs (GSM/GPRS, UMTS, CDMA2000), radio access modes (FDD, TDD) and options (1.28Mcps TDD, 3.84Mcps).
   - UE radio access capability related information (see e.g. 25.306 REL-5) which indicates e.g. supported channels, spreading factors, UE power class, duplex distances, frequency bands, multi-mode and multi-RAT capabilities, security, measurement and UE positioning capabilities, supported bit rates. UE capabilities in general:

   e.g. size/resolution of the screen, support for Java engine, GPS-receiver available/features. Other UE characteristics: e.g. model and
   software version (e.g. IMEISV), UESBI .
   - information related to the UE position, e.g. accurate location of UE using sophisticated positioning methods, specially satellite based positioning (GPS, GALILEO,..): this is considered to be specially relevant in case of multi access networks including access technologies without cellular nature like WLAN.
   - user subscriptions (e.g. for specific services like MBMS or for access rights for shared UTRAN networks, charging aspects, QoS, roaming data) and UE's activated services/subscriber settings (e.g. informations about the users who joined a certain MBMS). Depending on the agreements between the user and the operator the user will be allowed to use different services. These agreements may differ from the capabilities of the UE that the user is using. Also the settings that are currently valid in the UE might be of interest (e.g. if it is possible to disable a service by a UE setting).
   - User profile information, e.g. age, gender, profession, hobbies and interests.
   - information about the ongoing services for a certain UE, e.g. described via UMTS QoS Classes, UMTS Bearer Service Attributes (TS 23.107) or via IETF protocols such as SDP (Session Description Protocol).
b) cell specific information improvements:
   For the present concept in REL-5 the load in a cell is just distinguished in load for realtime (RT) and non-realtime (NRT) services for uplink (UL) and downlink (DL). In addition a cell capacity class is provided to give a relative indication of the cell capacity among all cells.
   The basic information that is already available in REL-5 could be enhanced by further information (as described below) to allow the consideration of cell specific information for more specific requirements and to allow therefore a radio resource management which is able to take user requirments into account. In general cell specific information is also used to consider groups of users that are accessing the parts of the network (e.g. a cell) with certain characteristics (e.g. for a specific service).
   Extension of the cell resource status information:
      - In addition to the load also the capacities that the operator reserves for specific traffic classes or services might be taken into account since they limit the maximum load that is possible.
      - Load of different sectors of cells
      - The separation in RT/NRT might be refined by considering the 4 traffic classes (defined in 23.107: conversational, streaming, interactive and background).
      - The resource status information could also be classified for different sorts of user subscriptions.
      - Instead of RT/NRT consideration it is also possible to distinguish the load based on Quality of Service (QoS) attributes (see e.g. also 23.107), as e.g. maximum bitrate, transfer delay, guaranteed bit rate, allocation/retention priority.
   Extension related to cell capabilities:
      - supported RAT, radio access mode, radio access option are implicitly considered by having network defined neighbour cell lists of cells that the UE has to monitor, but it could also be explicitely made available to the CRRM process.
      - This might be further extended, e.g. to indicate MBMS- or HSDPA-capabilities of the different cells to allow exchange of users among cells which are able to provide the same service. Also hierarchical cell levels (HCS) of the cells might be included in the CRRM process.

### Ad a)

If the CRRM Process can take advantage from user/UE-specific information, it can obviously distribute the traffic between various access technologies in an advantageous way.

### Some examples:

### Example a-1:

If at a given time a UE which has both TDD LCR and FDD capabilities moves towards cells operating in TDD LCR and FDD, the CRRM Process can efficiently combine the capabilities information with load information of those cells and make a better target cell decision that causes in our example a better load distribution between TDD LCR and FDD operated cells. The target cell decision could involve creation of a target cell list by the CRRM entity, where the cell with lower load (that in this example is the best target cell) is put at the top of the list.

### Example a-2:

In this example, the CRRM Process is implemented in a standalone CRRM entity.

The information about RAT capabilities of UEs can further improve the CRRM performance by introducing a new function to the network by which the network has the possibility to force the UEs to change their selected access technology.
The following scenario shows the importance of this function:
Imagine that a Multicast Broadcast Multimedia Service (MBMS) is about to start. In a region belonging to the MBMS service area there are three cells with similar total cell capacity, operated in FDD, TDD LCR and TDD HCR. For simplicity we assume that all of MBMS service users are located in the overlapped coverage area of these three cells however all users are attached to the network in FDD cell that means no one is attached via TDD LCR and no one via TDD HCR. It is assumed that there is not enough resource available in the FDD cell for delivering MBMS to all the UEs (or that this would excessively increase the interference) and that the network is not willing to wait that this resource becomes available. If CRRM knows that for example 30% of MBMS service users have Terminals with both FDD and TDD LCR capabilities and further 30% with both FDD and TDD HCR capabilities, the CRRM can advise the network to force 30% of users with TDD LCR capability to switch to TDD LCR cell and other 30% of users with TDD HCR capability to switch to TDD HCR. By this method, the MBMS can be delivered to the users and a better load balancing and suppressed interference can be achieved.
To give the network the ability to force/advise the multi RAT UEs to switch to other access technology as currently attached (network initiated cell reselection), new procedures have to be introduced in the network.

### Example a-3:

In this example, the CRRM Process involves both RRM and CRRM entities: an RRM entity receives policies from a CRRM entity. RRM can calculate different figures that would be useful in the CRRM entity when deciding on the policies to be provided. Some of these figures could be for example the current load (e.g. RT or NRT) of users with certain characteristics (e.g. HSDPA or EDGE capable) in the cell. The CRRM entity could then adjust Load Targets for these cells by also considering said information. In this case, Load Targets should be specific to the load generated by UEs with certain characteristics, so that the CRRM entity can for example advise the RRM to decrease/increase the load due to those UEs in the cell. Furthermore information about the number of users in every cell/sector can be considered in the CRRM Process. This can also applies for number of users having activated a certain service.

### Example a-4:

This example is about UE-specific information related to the accurate UE location. This information can be used in the CRRM Process that can be implemented in the RRM or in the CRRM entity, leading to better distribution of the load between access networks.

The CRRM Process will be provided with detailed coverage information (including the positions of alternative access points and probably with details of their coverage area) for the involved cells of possibly different RATs (UMTS, GSM, WLAN, ...), UE's current location, other UE-specific information and detailed information on the cell resource status in a certain area. In this way, the most efficient CRRM Process can be done, which takes into account user demands and also results in the best network's resource usage, decreased interference and effective load distribution.

The more accurate current location of UE can be either calculated by sophisticated algorithms in network or in case of satellite navigation equipped user terminal be delivered by satellite positioning systems like GPS or GALILEO.

### Example a-5:

Considering CRRM in connection with MBMS with the additional user (e.g. subscribed to which service? frequent user of a service?)/UE specific information (e.g. Which UE functionalities are present? Which RAT, radio access mode/option, frequency bands are supported? Which service is active?) CRRM might guide a user/UE to a cell which provides the best QoS with the least effort in the network, e.g. to minimize the effort for broadcasting MBMS content in an area for only a few users it might be useful to concentrate these users in one cell.
Also the change from point to point to point to multipoint transmission and vice versa has an impact on the usage of the radio resources and its management can be improved by knowledge about the UE capabilities and user subscriptions.

### Example a-6:

Considering CRRM in connection with UTRAN sharing (different operators share UTRAN equipment in a specific area for cost reduction reasons) it will be of importance to know the access rights of the user/UE to serve users/UEs which have some access restrictions. To solve this in a proper way the CRRM process could benefit from this kind of access right information in that sense that CRRM is early enough aware of restrictions and dropped calls can be prevented.

### Example a-7:

Including user subscriptions in the CRRM process would limit CRRM activities to those services which are applicable for the user and would also improve customer satisfaction.
Currently a handover of the active service to a neighbour cell/system leads to the question whether the neighbour cell could provide the same service. If this is not possible due to some limitations it is obvious that there will be downgrade (in quality or data rate etc.). But having the information about user subscription, UE capabilities and settings in the CRRM process, it would also be possible to consider an upgrade of the service without trail and error procedure.

### Example a-8:

The service that is active in a UE is so far only considered in the overall load value of the cell which is available in the CRRM entity. To allow CRRM to take the usage of special services into account and to be able to direct specific users to specific cells it would be necessary to know the active service in such a UE.
E.g. MBMS service of one content provider is running only on a few mobiles in the same geographic area but in different cells so CRRM could concentrate them to reduce broadcast power provided that it is known which user has activated this service.

### Ad b)

In the current version of 3GPP CRRM architecture the only load distinction is between Real Time (RT) and Non Real Time (NRT) services. However to meet user's demands, the distinction should be done in more sophisticated way. Detailed information on the cell resource status and the cell capabilities would be valuable for the CRRM Process.

### Example b-1:

Certain services require their own reserved resources so that user's satisfaction can be guaranteed. As typical example for down link services MBMS and HSDPA can be mentioned. Also other uplink and downlink services are possible, for which it is reasonable to reserve certain amount of network resources. To achieve also a service based load balancing in the network, the current service specific load in the cell versus reserved resources should be taken into account in the CRRM Process in order to prepare the target cell list. The following scenario will underline the importance of this fact. Imagine that the network operator has reserved a certain amount of its resources for a specific service like MBMS. At a given time a subscriber is using the MBMS service while moving to an area overlapped by cells C1 and C2. If the current MBMS specific load in C1 is about to exceed the reserved resource limit or this load is far higher than MBMS specific load in C2, the CRRM Process would favour/cause handover to C2, which results again in better load sharing and also guaranteed service continuity. Without this service specific load measurement these advantages wouldn't be achieved. The definition of service specific load parameters are subject to standardization to guarantee vendor interoperability.

### Example b-2:

Detailed information on the cell resource status can indicate load, reserved resources or a figure of users (e.g. the known number of users) that are accessing the network with certain characteristics (e.g. for receiving a certain MBMS).

### Example b-3:

Detailed information on the cell resource status could possibly refer to any of the UE-specific information, e.g. the load due to the users that are accessing the network with certain radio access types (e.g. HSDPA) or services, the load due to subscribers with a certain QoS profile.

In the following, the present invention will be described in greater detail on the basis of preferred embodiments with reference to the accompanying drawings, in which:

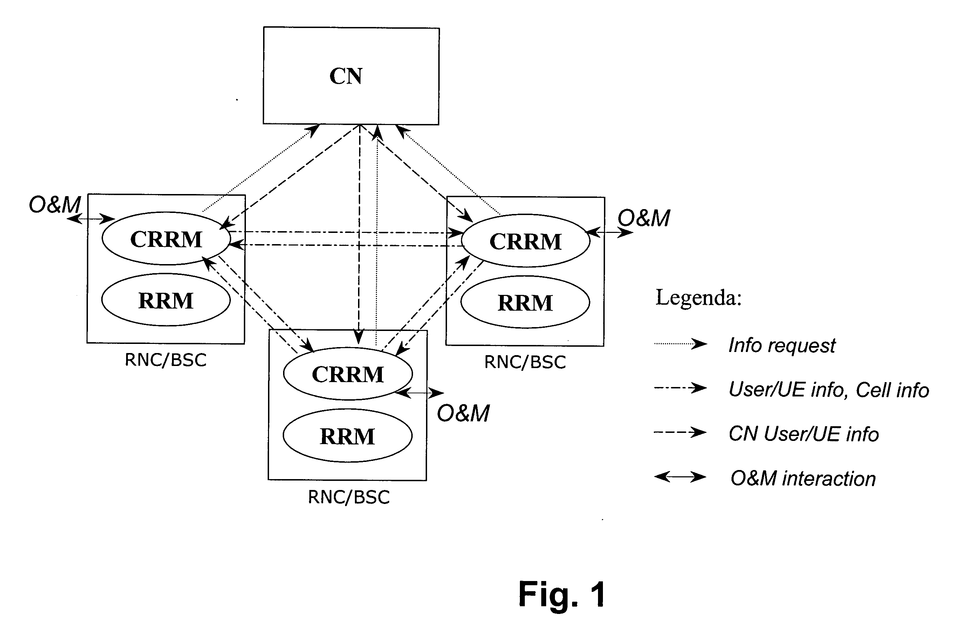

Figure 1 shows a principle diagram of a radio network in which a CRRM entity is implemented in every RNC/BSC,

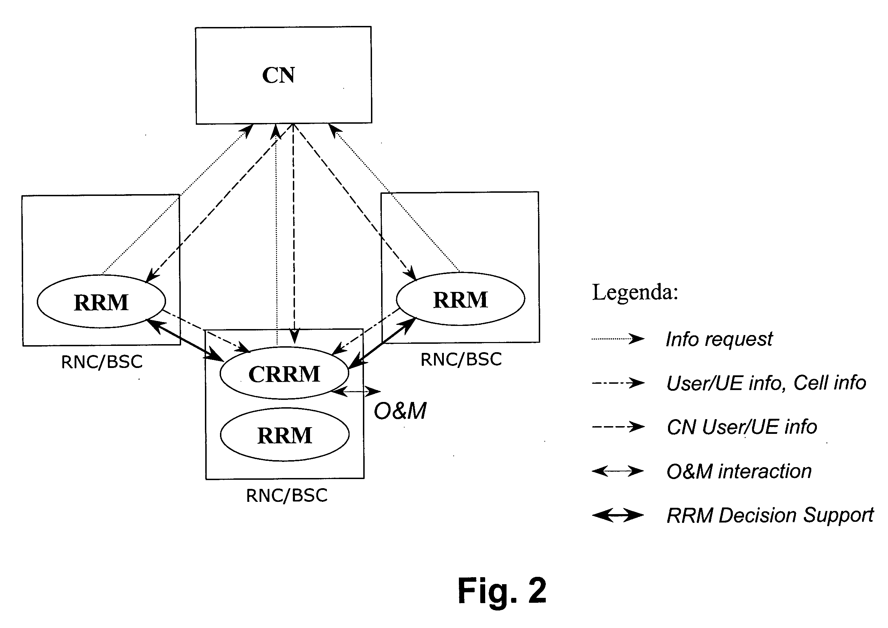

Figure 2 shows a principle diagram of a radio network in which a CRRM entity is implemented only in some RNC/BSC,

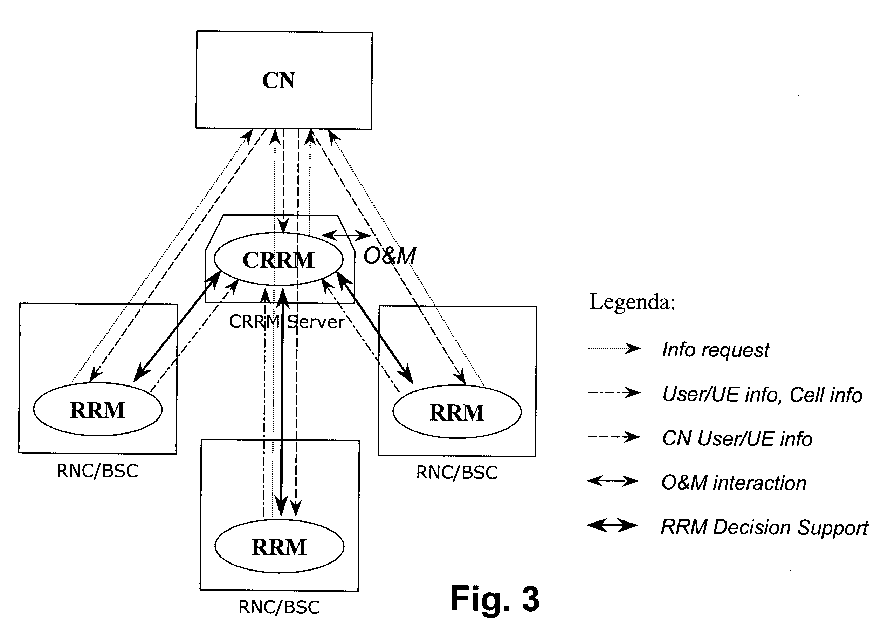

Figure 3 shows a principle diagram of a radio network in which a CRRM entity is implemented in a standalone server, and
Figure 4 shows a principle diagram of a radio network in which a CRRM entity is a standalone server according to an UTRAN evolved architecture.

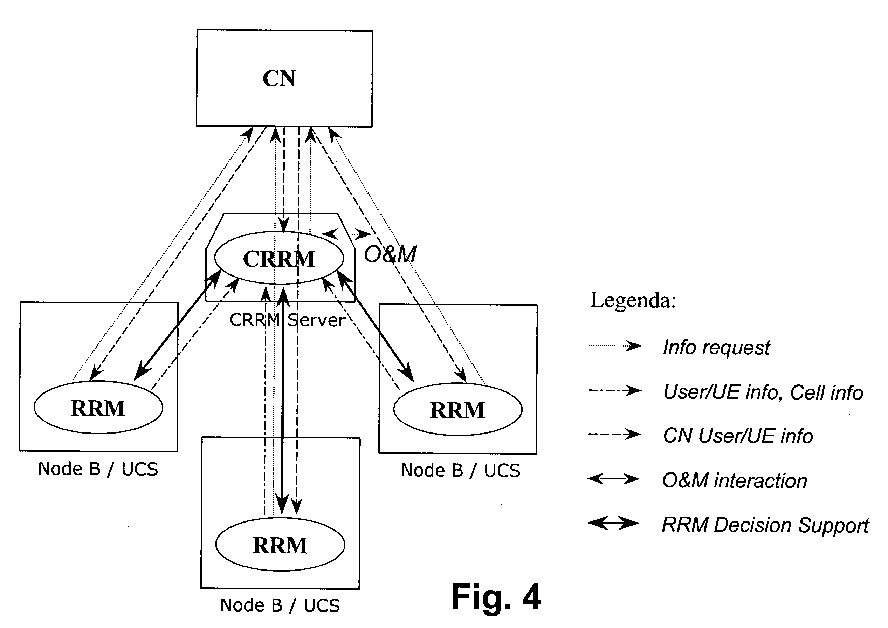

In every Figure there are schematically different network entities like CN (Core Network) and RNC/BSC and Node B/UCS respectively (above all in Figure 4) which are connected each other. The depicted oval circles marked with CRRM and RRM respectively indicate functionalities which can be implemented in different network entities. The indicated arrows represent the message flow among the network entities in a certain direction.

It is noted that different information could comprise further information as explained in the following:

CN User/UE info (= information) can comprise UE classmark, Subscription info, activated services, user settings, UE Capabilities, UE positioning info, etc.

User/UE info can comprise CN User/UE info, UE Radio Access Capabilities, Shared Network information, UE settings, etc.

Cell info can comprise Cell capabilities, reserved capacities, cell load for different traffic classes, etc.

The effects and advantages regarding said additional information is explained in the above mentioned examples.

### ABBREVIATIONS

- CRRM: Common Radio Resource Management
- GSM: Global System for Mobile communication
- GERAN: GSM/EDGE radio access network
- EDGE: Enhanced data rates for GSM Evolution
- UMTS: Universal mobile telecommunications system
- UTRAN: UMTS terrestrial radio access network
- UTRA FDD: UMTS Terrestrial Radio Access Frequency Division Duplex
- UTRA TDD LCR: UMTS Terrestrial Radio Access Time Division Duplex Low Chip Rate
- UTRA TDD HCR: UMTS Terrestiral Radio Access Time Division Duplex High Chip Rate
- OFDM: Orthogonal Frequency Division Multiplexing
- WLAN: Wireless Local Access Network
- RRM: Radio Resource Management
- 3GPP RAN WG3: Third-generation Partnership Project Radio Access Network Working Group 3
- RAT: Radio Access Technology
- UE: User Equipement
- QoS: Quality of Service
- HSDPA: high speed downlink packet access
- GPS: Global Positioning System
- GALILEO: (Is European version of american GPS)
- MBMS: Multicast Broadcast Multimedia Service
- BM-SC: Broadcast Multicast Service Center
- O&M: Operation and Maintenance

## Claims

1. A method for performing radio resource management (RRM) in a mobile radio network based on exchanging load information between at least one network entity and a Common Resource Management entity (CRRM) **characterized in that**:
- transmitting user equipment information and/or subscriber related information and/or radio cell status information from different network entities (CN, RNC/BSC, Node B/UCS) to a Common Resource Management entity (CRRM); and
- using said pieces of information in said Common Resource Management entity (CRRM) for deciding on the most suitable network access.

2. A method according to claim 1, wherein the network entities (CN, RNC/BSC, Node B/UCS, CRRM server) support different access technologies, particulary UMTS FDD, UMTS TDD or GERAN.

3. A method according to claim 1 or 2, wherein a network entity is represented by a Visitor Location Register (CN), by a Home Location Register (CN), by a Radio Network Controller (RNC) or by Radio Resource Management entity (RRM).

4. A method according to any one of the preceding claims, wherein said pieces of information are used for deciding to switch to an alternative access technology and/or to change the radio cell or cell sector and/or to change the access point to the mobile radio network.

5. A method according to claim 4, wherein the decision is dependent on a predeterminated load threshold.

6. A method according to any one of the preceding claims, wherein user equipment information comprises parameters like user terminal's capabilities and/or user's settings and/or accurate information about user's location.

7. A method according to any one of the preceding claims, wherein subscriber related information comprises parameters like subscription to specific services.

8. A method according to any one of the preceding claims, wherein radio cell status information comprises parameters like load of certain traffic classes and/or HDSPA services and/or MBMS services.

9. A Common Resource Management entity (CRRM; CRRM server) for performing radio resource management (RRM) in a mobile radio network based on receiving load information from at least one Radio Resource Management entity **characterized in that**:
- comprising receiving means arranged for receiving user equipment information and/or subscriber related information and/or radio cell status information from different network entities (CN, RNC/BSC, Node B/UCS); and
- comprising decision means arranged for deciding on the most suitable network access using said pieces of information.

10. A Radio Resource Management entity (RNC/BSC, Node B/UCS) for radio resource management (RRM) in a mobile radio network based on transmitting load information to a Common Resource Management entity **characterized in that**:
comprising transmitting means arranged for transmitting user equipment information and/or subscriber related information and/or radio cell status information to a Common Resource Management entity (CRRM), in order to enable decision on the most suitable network access using said pieces of information.
